# EUROPEAN PATENT APPLICATION

(11) **EP 3 450 517 A1**
(43) Date of publication of application: **06.03.2019**
(21) Application number: 18191244.5
(22) Date of filing: 28.08.2018
(51) Int. Cl.: C09D 191/00, B27K 3/34, B27N 1/00, C09D 191/06

(54) **WOOD COMPOSITE OBJECTS**

(30) Priority: 09.05.2018 EP 18171499; 30.08.2017 EP 17188654
(71) Applicant: Govi, 9031 Drongen (BE)
(72) Inventor: COCQUYT, Jan, 9800 Deinze (BE); VAN CANEYT, Chris, 9520 Vlierzele (BE); BOEKAERTS, Bert, 2590 Berlaar (BE); SELS, Bert, 2260 Westerlo (BE)
(74) Representative: Gevers Patents

(57) **Abstract**

A method for the hydrophobization of wood-based materials wherein said wood-based materials are hydrophobized with an aqueous emulsion comprising an organic ketone composition comprising x percent by weight (wt %), relative to the total weight of the organic ketone composition, of at least one ketone having the formula R1-CO-R2, wherein R1 and R2 are hydrocarbon radicals which are independently selected from hydrocarbon radicals comprising from 6 to 24 carbon atoms, characterized in that the organic composition has a penetration value P mm of at least 40, measured in accordance with the ASTM standard method D1321 - 10 at 24 °C, and x is at least 32 when the penetration value P mm is equal to or higher than 110 and x > 3520/P when P is higher than 40 but lower than 110.

## Description

### FIELD OF THE INVENTION

The present invention relates to a method for the hydrophobization of wood based raw materials, in particular wood particles, as well as the wood-based products, in particular wood composite objects obtainable therefrom. More particularly, the invention relates to making these wood composite objects better resistant to moisture or water, reducing the penetration of water into the wood composite material of the object, such that the material is less subject to swelling because of ingress of moisture and/or contact with water.

### BACKGROUND OF THE INVENTION

Conventional wood-based composites, in particular wood-based composite panels are manufactured products made primarily from wood-based raw materials with only a few percent of resin and other additives. The wood-based raw materials can be in different sizes and shapes such as notably veneers, laminates, lumber, strands, flakes, particles, and fibers. The wood-based composites are produced as further processing products by joining the wood-based raw materials, e.g., by thermal setting, pressing or gluing of the wood-based raw materials using suitable binders. As examples of wood-based composites, mention may be made of wood-based composite panels, wood-based composite pallets, and the like.

The family of wood-based composite panels represent an impressive range of engineering properties. The panels are often named after the type of particles that are used for its manufacture. Popular family members are notably "Oriented Strand Board" or OSB, which are made from wood strands, "Particleboard" made from wood particles, "Flakeboard" made from wood flakes, "Chipboard" made from wood chips, and "Fiberboard" made from wood fibers. The family of Fiberboards comprises as popular family members "Medium Density Fibreboard" of MDF, "High Density Fibreboard" or HDF, light MDF or LDF, Hardboard or HB, and Softboard or insulation board.

A variety of wood sources are appropriate for use in wood-based composites. The wood-based raw materials may be obtained as waste byproduct from wood processing, or by wood size reduction steps such as cutters, hackers, flakers, beaters, impact mills, hammers or hammer mills, and the like.

Bonding in conventional wood-based composites is often provided by thermosetting adhesive resins. For example, formaldehyde-based resins, in particular urea formaldehyde (UF) resin, are used to make most of the world's particleboard production. Other formaldehyde-based resins are melamine formaldehyde (MF) and phenol formaldehyde (PF).

Isocyanate-based adhesives (MDI) have also been used for commercial production of particleboards, in particular MDF and OSB. Relative to the volumes used of UF adhesives, the volumes used of the isocyanate adhesives are small. Isocyanate adhesives based on MDI are commonly used. MDI stands for methylene diphenyl diisocyanate. In actual fact the isocyanates used consist mostly of polymeric forms of MDI. Although more expensive than formaldehyde based adhesives, MDI performs so well that a particleboard with adequate properties can be made with much less resin than is possible with formaldehyde resins.

A number of other additives are used in the production of wood-based composite products. The most common additive is wax, which is used to provide products with some resistance to liquid water absorption.

Wax, for example, can be applied to solid wood to block water pathways and reduce the capillary pressure that leads to water absorbtion.

For example, Borgin and Corbertt describes in Plastics Paint Rubber, 4, pages 69-72, the use of various waxes as water repellents for radiata pine wood (Pinus radiata D.Don). The waxes in their study included paraffin waxes, petroleum jelly, beeswax, and carnauba wax. They found that all waxes were effective at preventing water uptake by and swelling of solid wood, but the best performing waxes were paraffin waxes.

It is known that by increasing the resin content, the dimensional stability of wood-based composite panels, in particular of OSB can be improved, but this increases the cost of the end product. Another method used to improve the dimensional stability of OSB is to spray wax onto the strands before the boards are pressed. The wax acts as a water repellent and reduces thickness swelling when boards in service are exposed to water. There is, however, an effective limit, of about 2-3%, that can be added to the internal structure of OSB, after which point the water repellency of the board does not significantly increase as wax content increases Moreover, the mechanical properties of OSB deteriorate as wax content increases above this limit.

US 2,858,236 describes, for obtaining resistance to moisture, how a lignocellulose hardboard panel is coated on its backside by applying, by brush or roller, a wax coating composition that has been heated above the respective melting point of the combined ingredients and then coated. The wax coating composition may be a mix of a paraffinic microcrystalline wax (85%) and stearone (15%). The stearone is described as an aliphatic ketone derived from a fatty acid mixture containing about 75% stearic acid, 22% palmitic acid and 3% oleic acid. The composition is preferably applied in a thickness from five to ten mills (0.127-0.254 mm). The drawback of coating a hardboard panel that has already been formed, is that the desired water resistance depends on the integrity of the coating and its moisture barrier properties. When the barrier is not perfect, or becomes broken during use, the hardboard panel becomes again sensitive to ingress of moisture.

In general, surface coatings are less effective at restricting moisture ingress into wood-based composite panels such as notably OSB compared to coating the particles used to make the panels, because of the irregular surface of OSB.

In particleboards, wax sizing is able to form an internal water-repellent barrier that reduces the rate of water absorption.

The use of paraffin waxes, in particular petroleum-based paraffin waxes, soft waxes, Fischer-Tropsch paraffins or mixtures or refined products thereof, in and/or on wood-based raw materials as waterproofing agents, also in the form of aqueous dispersions, is known per se. For example, waterproofing of wood raw materials using Fischer-Tropsch paraffins according to EP 1 448 345 B1 can be mentioned.

US 2011/0042021 A1 describes how the water uptake and swelling tendency of wood compositions, such as particle boards, fiber boards and oriented strand boards, may be reduced by applying, onto the wood raw materials from lignocelluloses in the form of fibres, strands or chips, olefins with an average of 24 to 50 carbon atoms, preferably with added paraffin waxes. A 10%wt C30+ alpha-olefin containing composition was compared with a purely paraffin wax as the comparative example. The treatment compositions were applied as a dispersion onto the fibre together with the binder. However, the availability of these paraffin waxes and/or the alpha-olefins are becoming increasingly more scarcely available and their costs are directly related to the petroleum costs.

In view of the above, there remains a need for environmentally friendly and economically practical methods in which water repellent agent compositions comprising materials derived from alternative sources can be used to render the wood-based composites as well as the wood-based raw materials from which they are produced, more or equally water repellent, i.e. having a reduced water uptake and swelling.

### SUMMARY OF THE INVENTION

The Applicant has now surprisingly found that it is possible to provide a method fulfilling the above mentioned needs.

It is thus an object of the present invention a method for the hydrophobization of wood-based materials wherein said wood-based materials are hydrophobized with an organic composition comprising x percent by weight (wt %), relative to the total weight of the organic composition, of at least one ketone having the formula R1-CO-R2, wherein R1 and R2 are hydrocarbon radicals which are independently selected from hydrocarbon radicals comprising from 6 to 24 carbon atoms, characterized in that the organic composition has a penetration value P mm of at least 40, measured in accordance with the ASTM standard method D1321 - 10 at 24 °C, and x is at least 32 when the penetration value P mm is equal to or higher than 110 and x > 3520/P when P is higher than 40 but lower than 110.

Another object of the present invention is directed to an aqueous emulsion suitable for use in a method for hydrophobization of wood-based materials and the manufacturing thereof.

Another object of the present invention is directed to hydrophobized wood-based materials prepared according to the method of the invention.

### DETAILED DESCRIPTION

The present invention will be described in the following with respect to particular embodiments and with reference to certain drawings but the invention is not limited thereto but only by the claims.

As used herein and in the claims, the terms "comprising" and "including" are inclusive or open-ended and do not exclude additional unrecited elements, compositional components, or method steps. Accordingly, the terms "comprising" and "including" encompass the more restrictive terms "consisting essentially of" and "consisting of."

Additionally, each compound used herein may be discussed interchangeably with respect to its chemical formula, chemical name, abbreviation, etc.

Within the context of the present invention, the expression "wood-based materials" is intended to refer to all materials that comprise wood or hemicellulose or cellulose.

Within the context of the present invention, the expression "wood" is intended to mean a cellular structure, having cell walls composed of cellulose and hemicellulose fibers bonded together by lignin polymer.

The term "wood-based materials" notably include, but is not limited to, wood composite objects and the wood elements notably used for the manufacturing of the wood composite objects.

The term "wood composite objects" will be understood to include, but not limited to plywood, hard board (HB), fiber board (FB) such as notably low density fibreboard (LDF), medium density fibreboard (MDF) or high density fibreboard (HDF), oriented strand board (OSB), particle board (PB), flakeboard, chipboard, wafer board (WF), parallel strand lumber (PSL), paper sheets, cardboard, cotton objects, and any other engineered wood product such as notably pallet blocks.

The term "wood elements" will be understood to include, but not limited to, wood lumber, wood veneer, wood strands, wood chips, wood flakes, wood particles, wood fibers, wood shavings, wood wafers, webs of splintered wood, sawdust or other forms of wood particles.

The inventors have now surprisingly found that in the hydrophobization method of the present invention, the use of specific organic ketone compositions which require to possess a specific minimum penetration value P mm of at least 40, measured in accordance with the ASTM standard method D1321 - 10 at 24 °C, and which requires to comprise selective types of ketones, as detailed above, which need to be present in a minimum amount being dependent on the penetration value P mm of the organic ketone composition, as detailed above, brings the significant advantage that the water uptake and the swelling tendency of the hydrophobized wood-based materials can be dramatically reduced. In other words, the inventors have found that there is a synergetic effect of the penetration value P mm (i.e the hardness) of the organic composition and the ketone content on the performance of said organic composition with regards to the hydrophobization of wood-based materials.

According to certain embodiments of the method of the present invention, the penetration value P mm of the organic composition is advantageously at least 45 and the at least one ketone having the formula R1-CO-R2, as detailed above, is advantageously present in the organic composition in an amount of x wt %, relative to the total weight of the organic composition, wherein x is at least 32 when the penetration value P mm is equal to or higher than 130 and x > (3510/P + 5) when P is higher than 45 but lower than 130, preferably the penetration value P mm of the organic composition is at least 50 and the at least one ketone having the formula R1-CO-R2, as detailed above, is advantageously present in the organic composition in an amount of x wt %, relative to the total weight of the organic composition, wherein x is at least 32 when the penetration value P mm is equal to or higher than 160 and x > (3520/P + 10) when P is higher than 50 but lower than 160.

According to certain embodiments of the method of the present invention, the penetration value P mm of the organic composition is at least 110 and the at least one ketone having the formula R1-CO-R2, as detailed above, is advantageously present in the organic composition in an amount of at least 50 wt %, preferably at least 60 wt %, preferably at least 70 wt %, preferably at least 80 wt %, relative to the total weight of the organic composition.

According to certain embodiments of the method of the present invention, the penetration value P mm of the organic composition is at least 130 and the at least one ketone having the formula R1-CO-R2, as detailed above, is advantageously present in the organic composition in an amount of at least 50 wt %, preferably at least 60 wt %, preferably at least 70 wt %, preferably at least 80 wt %, relative to the total weight of the organic composition.

According to certain embodiments of the method of the present invention, the penetration value P mm of the organic composition is at least 160 and the at least one ketone having the formula R1-CO-R2, as detailed above, is advantageously present in the organic composition in an amount of at least 50 wt %, preferably at least 60 wt %, preferably at least 70 wt %, preferably at least 80 wt %, relative to the total weight of the organic composition.

The weight (wt %), relative to the total weight of the organic composition, of at least one ketone having the formula R1-CO-R2, as detailed above, can be determined by using standard analytical methods known in the art, such as Nuclear magnetic resonance (NMR), gas chromatography (GC); liquid chromatography (LC); infrared (IR) spectroscopy; mass spectroscopy (MS); fourier transform infrared (FTIR) spectroscopy and the like, preferably by using gas chromatography methods (GC), in particular quantitative GC methods such as notably described in detail below in the working examples.

The inventors have further found that the penetration value P mm, measured in accordance with the ASTM standard method D1321 - 10 at 24 °C, of the organic composition used in the method of the present invention, can be tuned to fulfil the necessary minimum P mm value, as detailed above, and can further be tuned over a broad range by the careful selection of the at least one ketone having the formula R1-CO-R2, wherein R1 and R2 are hydrocarbon radicals which are independently selected from hydrocarbon radicals comprising from 6 to 24 carbon atoms, as illustrated in the experimental section.

Within the context of the present invention, the expression "at least one ketone having the formula R1-CO-R2" is intended to denote one or more than one ketone having the formula R1-CO-R2. Mixtures of ketones having the formula R1-CO-R2 can also be used for the purpose of the invention.

The term "hydrocarbon radicals comprising from 6 to 24 carbon atoms", as used herein, may have the broadest meaning generally understood in the art, and may include a moiety which is linear, branched, cyclic or a combination thereof which may be completely saturated or may contain one or more units of unsaturation, but which is not aromatic and all of these 6 to 24 carbon atoms may be optionally substituted.

The term "saturated", as used herein, means that a moiety has no double or triple bonds.

The term "unsaturated", as used herein, means that a moiety has one or more double or triple bonds.

Preferably, R1 and R2 of the at least one ketone having the formula R1-CO-R2 are hydrocarbon radicals comprising from 12 to 20 carbon atoms, more preferably from 12 to 18 carbon atoms.

According to a preferred embodiment of the method of the present invention, the organic composition comprises at least 2 ketones, more preferably at least 3 ketones, having the formula R1-CO-R2, wherein R1 and R2 are hydrocarbon radicals which are independently selected from hydrocarbon radicals comprising from 12 to 20 carbon atoms, more preferably from 12 to 18 carbon atoms.

The inventors have found that ketones are very suitable alternatives to the conventionally known and used wax components that are based on fossil fuels, as described above in the background section. The boiling points of ketones are in general higher than those of alkanes of similar molar masses thereby providing that the organic compositions as used for the hydrophobization of wood-based materials in the method of the present invention are also less volatile than the conventionally known and used wax components.

Suitable organic compositions as used for the hydrophobization of wood-based materials in the method of the present invention can be obtained by processes comprising at least one ketonisation step of mixtures comprising at least one component selected from carboxylic acids and the derivatives thereof, preferably fatty acids, esters of fatty acids such as monoglycerides, diglycerides, triglycerides, fatty alcohols, fatty aldehydes, anhydrides of fatty acids, and metal salts of fatty acids. The ketonisation of such mixtures, referred to as feedstocks, are notably described in WO 2007/068795 A1 and WO 2007/068799 A1, the whole content of which is herein incorporated by reference. These feedstocks can be of biological or synthetic origin or combinations thereof.

Therefore, another significant advantage of the method of the present invention lies in the fact that organic compositions according to the present invention may be derived from renewable resources, more particularly from animal or vegetable oils or fats.

It is further understood that the ketonisation of fatty acids, esters of fatty acids such as monoglycerides, diglycerides, triglycerides, fatty alcohols, fatty aldehydes, anhydrides of fatty acids, and metal salts of fatty acids is known per se.

According to certain embodiments of the present invention, the organic composition may be prepared from feedstock originating from starting material of biological origin, called biological starting material in this description. The biological starting material is selected from the group consisting of:
a) plant fats, oils, waxes; animal fats, oils, waxes; fish fats, oils, waxes, and
b) fatty acids or free fatty acids obtained from plant fats, plant oils, plant waxes; animal fats, animal oils, animal waxes; fish fats, fish oils, fish waxes, and mixtures thereof by hydrolysis, transesterification or pyro lysis, and
c) esters obtained from plant fats, plant oils, plant waxes; animal fats, animal oils, animal waxes; fish fats, fish oils, fish waxes, and mixtures thereof by transesterification, and
d) metal salts of fatty acids obtained from plant fats, plant oils, plant waxes; animal fats, animal oils, animal waxes; fish fats, fish oils, fish waxes, and mixtures thereof by saponification, and
e) anhydrides of fatty acids from plant fats, plant oils, plant waxes; animal fats, animal oils, animal waxes; fish fats, fish oils, fish waxes, and mixtures thereof, and
f) esters obtained by esterification of free fatty acids of plant, animal and fish origin with alcohols, and
g) fatty alcohols or aldehydes obtained as reduction products of fatty acids from plant fats, plant oils, plant waxes; animal fats, animal oils, animal waxes; fish fats, fish oils, fish waxes, and mixtures thereof, and
h) recycled food grade fats and oils, and fats, oils and waxes obtained by genetic engineering, and
i) fatty acids rich mixtures obtained as a side stream during purification of animal and plant triglycerides, and
j) mixtures of the starting materials.

Preferably, the biological starting material is selected from the group consisting of:
a) plant fats, oils, waxes; animal fats, oils, waxes; fish fats, oils, waxes, and
b) fatty acids or free fatty acids obtained from plant fats, plant oils, plant waxes; animal fats, animal oils, animal waxes; fish fats, fish oils, fish waxes, and mixtures thereof by hydrolysis, transesterification or pyro lysis, and
i) fatty acids rich mixtures obtained as a side stream during purification of animal and plant triglycerides.

Biological starting materials also include corresponding compounds derived from algae and insects as well as starting materials derived from aldehydes and ketones prepared from carbohydrates.

Examples of suitable biological starting materials include fish oils such as baltic herring oil, salmon oil, herring oil, tuna oil, anchovy oil, sardine oil, and mackerel oil; plant oils such as rapeseed oil, colza oil, canola oil, tall oil, sunflower seed oil, soybean oil, corn oil, hemp oil, olive oil, cottonseed oil, mustard oil, palm oil, peanut oil, castor oil, jatropha seed oil, palm kernel oil, and coconut oil; and moreover, suitable are also animal fats such as lard, tallow, and also waste and recycled food grade fats and oils, as well as fats, waxes and oils produced by genetic engineering. In addition to fats and oils, suitable starting materials of biological origin include animal waxes such as bee wax, Chinese wax (insect wax), shellac wax, and lanoline (wool wax), as well as plant waxes such as carnauba palm wax, ouricouri palm wax, jojoba seed oil, candelilla wax, esparto wax, Japan wax, and rice bran oil. The biological starting material may also contain free fatty acids and/or fatty acid esters and/or metal salts thereof, or cross-linked products of the biological starting material. The metal salts are typically alkali earth metal or alkali metal salts.

If desired, at least part of the at least one ketone having the formula R1-CO-R2, as detailed above, comprised in organic composition of the present invention may have been subjected to at least one hydrodeoxygenation step, and optionally at least one isomerization step thereby forming at least one paraffin having the general formula R1-CH₂-R2, wherein R1 and R2 have the same meaning as defined.

According to certain embodiments of the method of the present invention, the organic composition, as described above, is used in the presence of at least one fossil-based derivative selected from petroleum-based products such as slackwax, soft waxes, mineral oil, foots oil, extracts such as residual aromatic extract, semi-refined wax, fully refined wax and Fischer-Tropsch wax and mixtures thereof. Slackwax is especially preferred.

Advantageously, the molar ratio of the at least one fossil-based derivative to the organic composition, as described above is ranging from 5:95 to 95:5, preferably from 10:90 to 90:10, preferably from 20:80 to 80:20, preferably from 30:70 to 70:30, preferably from 40:60 to 60:40.

According to certain embodiments of the present invention, the organic composition is used in the form of a solid, a melt or in any available form of liquid application medium such as an aqueous emulsion of the water-in-oil or oil-in-water type, or solutions in organic solvents.

According to a preferred embodiment of the present invention, the organic composition is used in the form of an aqueous emulsion.

Another aspect of the present invention is an aqueous emulsion for use in the method for the hydrophobization of wood-based materials, as defined above, comprising, based on the total weight of the aqueous emulsion,
a) from 1 to 70 wt % of the organic composition, as detailed above,
b) from 0.1 to 10 wt % of at least one emulsifier, and
c) from 20 to 98.9 wt % of water.

Preferably, the weight % of the organic composition in the aqueous emulsion for use in the method for the hydrophobization of wood-based materials, as defined above, is from 5 to 65 wt %, more preferably from 15 to 60 wt %, even more preferably from 30 to 55 wt %, based on the total weight of the aqueous emulsion.

Within the context of the present invention, the expression "at least one emulsifier" is intended to denote one or more than one emulsifier. Mixtures of emulsifiers can also be used for the purpose of the invention.

It is further understood that all definitions and preferences as described above for the organic composition as used in the method according to the present invention, equally apply for this embodiment and all further embodiments, as described below.

The at least one emulsifier may be anionic, cationic, nonionic or may have a betaine structure. Among suitable emulsifiers mention may be notably made of:
(i) alcohol polyethylene glycol ethers, e.g., those of the general formula R-O-(R^{a}-O)ₙ-H, fatty acid ester polyethylene glycol ethers, e.g., those of the general formula R-COO-(R^{a}-O)ₙ-H, alkylpolyalkylene glycol ether carboxylic acids, e.g., those of the general formula R-O-(R^{a}-O)ₙ-CH₂-COOH and/or their alkanolammonium salts, alkali metal salts or alkaline earth metal salts, alkylamidoalkylbetaines, for example, those of the general formula R-CONH(CH₂)ₙN⁺(CH₃)CH₂-COO⁻, amine oxides, e.g., those of the general formula R-NO(CH₃)₂, wherein R denotes a branched or linear, saturated or unsaturated C₈ to C₂₀ and/or C₇ to C₁₉ hydrocarbon radical, n is a number from 2 to 20, R^{a} is an alkylene radical having 2 to 4 hydrocarbons, e.g., C₂H₄ and/or C₃H₆, optionally different for each n (including the block structure),
(ii) products from the alkoxylation of triglycerides, which are esterified entirely or partially with C₆ to C₂₂ fatty acids, where 2 to 40 mol alkoxylating agent are used per mol,
(iii) partially neutralized partial glycerides of monovalent or polyvalent C2 to C22 carboxylic acids, in particular C8 to C22 carboxylic acids, such as linoleic acid, stearic acid, isostearic acid, palmitic acid, lauric acid, caprylic acid, capric acid, citric acid and/or lactic acid,
(iv) esters/partial esters of polyglycerol, where the carboxylic acid group preferably has 2 to 22 carbon atoms,
(v) C6 to C32 carboxylic acids, in particular C8 to C26 fatty acids, completely or partially saponified, in particular completely saponified, e.g., with amines or amine compounds such as diethanolamine.

Preferably, the at least one emulsifier is present in the aqueous emulsion for use in the method for the hydrophobization of wood-based materials, as defined above, in an amount from 0.5 to 10 wt %, more preferably from 0.8 to 8 wt %, even more preferably from 1 to 5 wt %, based on the total weight of the aqueous emulsion.

Preferably, water is present in the aqueous emulsion for use in the method for the hydrophobization of wood-based materials, as defined above, in an amount from 20 to 90 wt %, more preferably from 25 to 75 wt %, even more preferably from 40 to 65 wt %, based on the total weight of the aqueous emulsion.

The aqueous emulsion according to the invention may further comprise at least one fossil-based derivative selected from petroleum-based products such as slackwax, soft waxes, mineral oil, foots oil, extracts such as residual aromatic extract, semi-refined wax, fully refined wax and Fischer-Tropsch wax and mixtures thereof.

If at least one fossil-based derivative, as detailed above, is present in the aqueous emulsion, the sum of the weight of the organic composition, as detailed above, and the at least one fossil-based derivative is advantageously from 1 to 70 wt %, preferably from 5 to 65 wt %, more preferably from 15 to 60 wt %, even more preferably from 30 to 55 wt %, based on the total weight of the aqueous emulsion and the molar ratio of the at least one fossil-based derivative to the organic composition, as described above, can range from 5:95 to 95:5, preferably from 10:90 to 90:10, preferably from 20:80 to 80:20, preferably from 30:70 to 70:30, preferably from 40:60 to 60:40.

The aqueous emulsion according to the invention may further comprise other ingredients in an amount from 0.1 to 5.0 wt %, preferably 0.1 to 2.5 wt %, more preferably 0.5 to 2.0 wt %, based on the total weight of the aqueous emulsion.

According to certain embodiments, other ingredients may be added to enhance the stability of the aqueous emulsion.

Said other ingredients are known to those skilled in the art of wax dispersions. Typical other ingredients may include, but are not limited to, stabilizers, dyes, biocides, fungicides and insecticides, antioxidants, antifoam agents, metal chelators, radical scavengers, and the like.

Suitable stabilizers notably include, but not limited to, organic and inorganic UV stabilizers, such as, copper oxide or other copper salts or complexes that resist leaching; zinc oxide; iron salts, iron oxide, iron complexes, transparent iron oxide and nanoparticle iron oxide; titanium dioxide; benzophenone and substituted benzophenones; cinnamic acid and its esters and amides; substituted triazines, such as triphenyl triazine and substituted phenyl triazine UV absorbers, benzotriazole and substituted benzotriazole UV absorbers; hindered amine light stabilizers, used individually or in combination.

Suitable biocides are known to those skilled in the art and notably include, but not limited to, biocides comprising isothiazolone compounds such as 5-dichloro-2-n-octyl-4-isothiazoline-3-one; 2-n-octyl-4-isothiazolin-3-one; 5-chloro-2- methyl-4-isothiazolin-3-one; 2-methyl-4-isothiazolin-3-one; 1,2-benzisothiazolin-3-one; n- butyl-I,2-benzisothiazolin-3-one; other halogenated isothiazolones, formaldehyde-releasing biocides suitable for preservation of emulsions, such as notably -2-bromo-2-nitropropane-1,3-diol (Bronopol), ethylenedioxydimethanol (EDDM), and tetrahydro-1,3,4,6-tetrakis(hydroxymethyl)imidazo [4,5-d]imidazole-2,5(1H,3H)-dione (TMAD); acetaldehyde-releasing biocides; succinaldehyde-releasing biocides; 2-propenal- releasing biocides and mixtures thereof.

Suitable antifoam agents are known to those skilled in the art.

Non limitative examples of commercially available antifoam agents suitable for use in the aqueous emulsion of the present invention include anti-foam products (SMI) from GOVI N.V..

Advantageously, the solid content of the aqueous emulsion is from 1.1 to 80 wt %, preferably from 25 to 75 wt %, more preferably from 35 to 60 wt %.

The manufacturing of the aqueous emulsion is also an aspect of the present invention.

The aqueous emulsion of the present invention can be prepared by a variety of methods known to the skilled person in the art. In general, the aqueous emulsion of the present invention can be prepared by a method comprising first a step of dispersion (i.e. intimate admixing) of the constituent components with any optional fossil-based derivative and/or any optional other ingredient, as detailed above, desired in the aqueous emulsion, followed by a step of homogenization (i.e. to reduce particle sizes). The homogenization step is typically carried out by using a high pressure homogenizer, known in the art. The preparation of the aqueous emulsion according to the present invention is advantageously carried out at a temperature ranging from 60 to 100 °C, preferably from 70 to 90 °C.

While any order of admixing may be used, it is typically useful to add first the at least one emulsifier, as detailed above and any optional other ingredient, as detailed above to at least a portion of the water thereby forming an emulsion and the organic composition, as detailed above and with any optional fossil-based derivative, as detailed above is then mixed into said emulsion.

It is further understood that the skilled person in the art will carry out said admixing according to general practice such as notably applying optimal time periods for addition and mixing of the at least one emulsifier, as detailed above, the organic composition, as detailed above, water, any optional fossil-based derivative, as detailed above, and any optional other ingredient, as detailed above.

According to certain embodiments of the present invention, the wood-based materials can be hydrophobized with the organic composition, in particular the aqueous emulsion, as detailed above, by applying the organic composition, in particular the aqueous emulsion, onto the surface or at least part of the surface of the wood-based materials, using suitable application techniques such as impregnating, padding, coating, and the like, known to the person skilled in the art.

Conventional coating techniques such as painting, spraying, flow- coating, transfer-coating, roller coating, brushing, dipping spreading, curtain coating and the like can be used.

The organic composition, in particular the aqueous emulsion, may be applied onto the surface or at least part of the surface of the wood-based materials in the form of a mixture with at least one binder or may be applied separately onto the surface or at least part of the surface of the wood-based materials prior or after the addition of the at least one binder.

Within the context of the present invention, the expression "at least one binder" is intended to denote one or more than one binder. Mixtures of binders can also be used for the purpose of the invention.

Typical binders suitable for use in the method of the present invention may include, but are not limited to, urea formaldehyde (UF) based resins, melamine urea formaldehyde (MUF) based resins, melamine (MF) formaldehyde based resins, phenol formaldehyde (PF) based resins, methylene diisocyanate (MDI) based resins, water-borne acrylic resins, saccharide-based resins, such as, for example saccharide derivative in acrylic dispersions, protein-based resins or mixtures thereof.

In general, these binders may be purchased in powder form or as liquids, usually water-based solutions. Before application, they are typically blended, according to proven recipes, with water and additional additives, e.g. hardeners, colours, fire retardants, preservatives, etc thereby forming an adhesive formulation.

In one embodiment of the present invention, the organic composition, in particular the aqueous emulsion, as detailed above, optionally in the form of a mixture with at least one binder or an adhesive formulation, is applied onto the surface or at least part of the surface of wood composite objects thereby forming a coated surface by using coating techniques selected from the group consisting of spraying, flow- coating, transfer-coating, roller coating, brushing, dipping spreading, preferably spraying.

As said above, the wood elements, as detailed above, can be used for the manufacturing of wood composite objects, as described above, by using processing techniques including notably thermal setting, pressing or gluing of said wood elements, preferably by pressing said wood elements.

According to preferred embodiments of the present invention, the wood elements, as detailed above, are hydrophobized with the organic composition, in particular the aqueous emulsion, as detailed above, according to the method of the present invention, as described above, prior to be processed and formation of wood composite objects.

The inventors have especially found that when the wood elements, as detailed above, are hydrophobized with the organic composition, in particular the aqueous emulsion, as detailed above, according to the method of the present invention, as described above, prior to be processed and formation of wood composite objects, said wood composite objects have improved moisture resistance, improved hydrophobicity, improved resistance to moisture adsorption, reduced penetration rate of water, resistance to swelling, and good water repellent properties. Moreover, reduced amounts of the organic composition can be used while achieving the same waterproofing effects as the conventional wax compositions, as illustrated in the experimental section.

If desired, the wood composite objects so obtained can then still be further hydrophobized according to the method of the present invention, as described above.

According to a preferred embodiment of the present invention, the aqueous emulsion, as described above, is applied onto and/or mixed with the wood elements, preferably selected from wood veneer, wood strands, wood chips, wood flakes, wood fibers, wood shavings, wood wafers, thereby forming a wood composition.

Another aspect of the present invention is a wood composition comprising, the aqueous emulsion, as detailed above and wood elements, as detailed above, and based on the total dry weight of the wood elements, comprises
a) from 0.1 to 2.0 wt %, preferably 0.3 to 1.5 wt %, more preferably 0.5 to 1.2 wt %, of solids content of the aqueous emulsion, as detailed above,
b) from 0 to 50 %, preferably from 3 to 30 %, more preferably from 3 to 20 %, even more preferably from 5 to 15.0 %, by dry weight of the at least one binder, as detailed above,
c) optionally from 0 to 15 %, preferably from 0.1 to 10 %, more preferably from 0.1 to 5 %, by dry weight of any additional additive.

Preferably, the wood elements are selected from the group consisting of wood veneer, wood strands, wood chips, wood flakes, wood fibers, wood shavings, wood wafers, webs of splintered wood, sawdust any other forms of wood particles and mixtures thereof.

As already mentioned above, the additional additives are known to the skilled in the art, such as hardeners, colours, fire retardants, preservatives, anti-static agent such as carbon black and the like.

Among suitable hardeners mention may be made of inorganic ammonium salts such as notably an ammonium sulphate, an ammonium phosphate or an ammonium carbonate, inorganic and/or organic Bronsted acids such as maleic, formic or phosphoric acid.

The wood composition can be prepared by a variety of methods involving intimate admixing of the constituent components with any optional ingredient, as detailed above, desired in the formulation. Typically, the mixing of the wood elements, as detailed above, the aqueous emulsion, as detailed above, optionally, the at least one binder, as detailed above, and optionally any additional additive is carried out by using a mixing device, known by the skilled in the art, whereby the aqueous emulsion, as detailed above, optionally the at least one binder, as detailed above, and optionally any additional additive are distributed over de wood elements surface, in particular by spraying onto surface of the wood elements. In general, the mixing of the constituent components with any optional binder, and optional any additional additive, as detailed above, is carried out at room temperature.

The manufacturing of the wood composition is another aspect of the present invention.

While any order of admixing may be used, it is typically useful to add first the aqueous emulsion to at least a portion of the wood elements and subsequently add the at least one binder or the adhesive formulation, when present, with the aim of achieving a uniform distribution of drops of resin on each and every particle.

Exemplary embodiments also include wood composite objects comprising the above described wood composition. The wood composite objects may be made from the wood composition using any suitable wood-processing method.

Suitable wood-processing methods for the manufacturing of for example wood-based panels are notably described by Mark Irle and Marius C. Barbu, chapter 1, pages 1 - 94, in Wood-Based Panels, An introduction for Specialists, edited by Heiko Thoemen, Mark Irle and Milan Sernek, 2010. In particular, they may be made by wood-processing methods which comprises applying heat, pressure or a combination thereof to the above described wood composition.

The wood composite objects and the manufacturing of said wood composite objects are another aspect of the present invention.

Preferably, the wood composite objects are selected from the group consisting of wood-based composite panels, wood-based composite pallets, paper-based materials, the wood composite object preferably being a wood composite panel or a wood-based panel.

Among wood-based composite panels mention may be made of particle board (PB), oriented strand board (OSB), flakeboard, chipboard and fibreboard, the fibreboard preferably being selected from medium density fibreboard (MDF) or high density fibreboard (HDF).

Among paper-based materials mention may be made of paperboard, paper sheet, and cartonboard.

Thus another aspect of the present invention is the use of the organic composition, as detailed above or the aqueous emulsion for hydrophobization of wood-based materials.

Further, in addition, according to a further embodiment, the fields of use which have been found particularly interesting for the organic composition or the aqueous emulsion of the present invention are in the domain of various applications such as construction (i.e. coating of beton); agricultural; food packaging, textile, and the like.

### EXAMPLES

The invention will now be described in more details with examples, whose purpose is merely illustrative and not intended to limit the scope of the invention.

### RAW MATERIALS

- Animal fatty acid rich product obtained as a by-product of the chemical refining of animal fats, Sonac Animal fatty acids, marketed by SONAC
- Complex mixture of different fatty acid streams from fatty acid distillation, Radiacid 0944, marketed by Oleon
- Distilled topped coconut fatty acid, Wilfarin DC-1218, marketed by Wilmar.
- Topped palm kernel fatty acid, Palmera B1220, marketed by KLK Oleo.
- Hombikat M211 titaniumdioxide, produced and marketed by Sachtleben Chemie Gmbh

### 1. Preparation of the organic ketone compositions

### Examples 1 - 4

The organic ketone compositions of Examples 1 - 4 are obtained by the ketonisation during 3.5 hours at 340 °C of 20 g feedstock (feedstock 1 - 4) using 8 g Hombikat M211 titaniumdioxide, produced and marketed by Sachtleben Chemie Gmbh, as a catalyst and under autogeneous nitrogen pressure and continuous mixing.

As used herein, the term "autogenous pressure" means the pressure resulting from containment of the reaction mixture in a vessel not operatively connected to an external source of pressure.
*Example 1* : using Radiacid 0944 as feedstock 1
*Example 2* : using Sonac Animal fatty acids as feedstock 2
*Example 3* : using topped palm kernel fatty acid as feedstock 3
*Example 4* : using distilled topped coconut fatty acid as feedstock 4

For each of the examples 1 - 4, the % wt of ketones, relative to the total weight of the organic ketone composition was determined using the following GC method, as detailed below.

### Example 5

The organic ketone composition of Example 5 is obtained by the ketonisation of feedstock 2. 200 gram of Sonac Animal Fatty Acids, marketed by Sonac were loaded in a 600 ml Parr reactor and under continuous mixing reacted for 6 hours at 340 °C using 100 g Hombikat M211 titanium dioxide catalyst. There was an autogeneous pressure buildup whereby the reactor was vented every 90 minutes.

### Comparative example 6

Comparative example 6 (CE 6): 12-Tricosanone (i.e 100 % C-23 ketone) purchased from TCI.

### Comparative examples 7

Comparative example 7 (CE 7): 18 - pentatriacontanone (i.e. 13 % C-31 ketone, 45 % C-33 ketone and 42 % C-35 ketone) purchased from Alfa Aesar.

### Comparative examples 8 - 14

Comparative examples 8 - 14 were prepared by mixing in different ratios 18 - pentatriacontanone of comparative example 7 with the animal fat (i.e. RV fat) having a penetration value of above 130 mm as measured according to ASTM-D1321 -10 at 23.9 °C, as summarized in the table below:

| **Comparative example number** | **Ratio CE 7:RV fat** |
|---|---|
| Comparative example 8 (CE 8) | 10:90 |
| Comparative example 9 (CE 9) | 15:85 |
| Comparative example 10 (CE 10) | 20:80 |
| Comparative example 11 (CE 11) | 25:75 |
| Comparative example 12 (CE 12) | 30:70 |
| Comparative example 13 (CE 13) | 40:60 |
| Comparative example 14 (CE 14) | 60:40 |

### Comparative example 15

Comparative example 15 (CE 15) was obtained by ketonisation of a fatty acid mixture saturated fatty acids, in particular 3.4 % myristic acid, 61.6 % containing palmitic acid and 35 % of stearic acid. The ketonisation was carried out as in examples 1 - 4.

### Comparative example 16 (CE 16)

A fatty acid mixture containing 55 % of straight-chain saturated C-8 fatty acid and 45 % of straight chain saturated C-10 fatty acid was ketonised as in examples 1 - 4 to obtain a ketone mixture containing 30 % C-15 ketone, 50 % C-17 ketone and 20 % C-19 ketone.

### Comparative example 17 (CE 17)

Stearone, a commercially available synthetic ketone mixture as defined in US 2,858,236 and GB 951,752, was independently prepared by ketonisation of a fatty acid mixture containing 75 % of stearic acid, 22 % of palmitic acid and 3 % of oleic acid. The latter fatty acid mixture was prepared from mixing 74.95 % of commercially available "Stearic acid, 97 %" purchased from Acros Organics (i.e. 99.7 % stearic acid and 0.3 % palmitic acid); 21.77 % of commercially available "Palmitic acid 98 %" purchased from Acros Organics (i.e. 99.0 % palmitic acid) and 3.274 % of commercially available "Oleic acid, tech. 90 %" purchased from Fisher Scientific, Manufacturer Alfa Aesar A16663AU (i.e. 90.8 % oleic acid, 2.8 % stearic acid and 1.1 % palmitic acid). The ketonisation was carried out as in examples 1 - 4.

### Determination of the penetration value P (in 0.1 mm)

The penetration value P (in 0.1 mm) of the organic ketone compositions (Examples 1 - 5) according to the invention as well as the comparative ketone compositions (Comparative examples 6 - 17 and the comparative wax compositions (Comparative examples 18 - 20) was measured by using the standard test method for Needle Penetration according to ASTM-D1321-10. A Normalab manual penetrometer with a standard needle was used and 50 g of each of the samples was placed in accordance with the procedure as described under point 8. of the ASTM-D1321-10 method. The test was carried out at 24 °C. Prior to placing the samples for the measurement, the samples were first fully melted, then kept for 2 hours at 40 °C, then placed at 24 °C for 22 hours before being measured at 24 °C.

The results are summarized in Tables 1, 2 and 3.

### Determination of the concentration of ketones, expressed in x percent bv weight (wt %), relative to the total weight of the organic ketone composition

For each of the examples 1 - 5 and the comparative examples 6 - 17, the value x has been determined by using quantitative gas chromatography (GC) according to following procedure:
After dissolution in chloroform and the addition of an internal standard eicosane, the sample was centrifugated in order to remove the catalyst. Eventual fatty acids not converted to ketone were sylilated using an excess N-Methyl-N-(trimethylsilyl)trifluoroacetamide (MSTFA) at 60 °C during 30 minutes.

An Agilent 6890 GC was used with a HP-5 column produced by Agilent, having a length of 30 m, an internal diameter of 0.32 mm and a (5%-Phenyl)-methylpolysiloxane film thickness of 0.25 µm.

A split ratio at the injection of 10:1 was applied at an initial temperature of 300 °C. Nitrogen gas was used as a carrier. The total flow was constant at 13.3 ml/min. The gas pressure was 5.23 psi The gas saver was on with a saver flow of 20.0 ml/min and a saver time of 2.00 minutes.

The oven temperature was first increased from 60 to 190 °C at 10 °C/min, from 190 °C tot 200 °C at 1 °C/min, then from 200 °C to 310 °C at 5 °C/min and finally kept at 310 °C for a further 15 minutes.

An FID detector at 320 °C was used using a hydrogen flow of 40 ml/min and an air flow at 450 ml/min. There was a constant column and makeup flow. The makeup gas was nitrogen and the combined flow was 45.0 ml/min.

### 2. Reference samples: wax compositions - comparative examples 18-20

**Comparative example 18 (CE 18):** a wax obtained from the solvent dewaxing of an SN150 base oil stream.. This wax is known as good water repellent wax for particleboards, chipboards or OSB.
**Comparative example 19 (CE 19):** a wax obtained from the solvent dewaxing of an SN300 or SN350 base oil stream. This wax is known as good water repellent wax for medium density fibreboard (MDF) and as an intermediate water repellent wax for particleboards, chipboards or OSB.
**Comparative example 20 (CE 20):** a SW03 wax purchased from ENI, Livorno, Italy, known as a lower quality water repellent wax for particleboards, chipboards or OSB.

### 3. General procedure for producing aqueous emulsion

An aqueous phase was prepared according to following recipe, as shown in the Table below,

| **Components** | **Amount in wt %** |
|---|---|
| emulsifier | 6.77 |
| water | 92.72 |
| biocide agent | 0.17 |
| Antifoam agent | 0.34 |

8,9 g water phase was placed in a 50 ml test tube and 6,1 g of one of the organic ketone compositions, as detailed above (examples 1 - 5 and comparative examples 6 - 17) or one of the comparative wax compositions (comparative examples 18 - 20) was added, thereby forming 15 ml of an aqueous pre-emulsion containing a continuous aqueous phase and a dispersed non-aqueous phase. This aqueous emulsion was then further subjected to a homogenization step by sonication in the Branson® sonifier 250 foreseen with a conical micro tip (1/8" for ½ resonator) at power level 6 and at a temperature between 80 and 100 °C. During sonication, an aqueous emulsion was formed.

The solid content of each of the aqueous emulsion was between 44 and 46 wt%.

### 4. General procedure for producing particle boards using the aqueous emulsion, as described under point 3

387 g of wood particles obtained from the Unilin Oostrozebeke particleboard plant were placed in a Kenwood Major Premium mixer foreseen with a dough hook. The stirring was carried out during the whole process at the lowest rate. Under stirring, one of the aqueous emulsion of examples 1 - 4, comparative examples 6 - 14 and the comparative examples 18 - 20, as described under point 2, was added to the wood chips by using a syringe dosing pump system (i.e. Prosense BV NE-300), at a rate of 1 ml/min. The dosing was carried out in such a manner that 0.60 wt % of the solid content of the aqueous emulsion was added with respect to the total dry weight of the wood chips. The obtained wood composition obtained thereof, was stirred for another 5 minutes. Subsequently, 59.5 g of a mixture (i.e adhesive formulation) consisting of 95.05 wt % of the binder, an urea formaldehyde (UF) based resin, and 4.94 wt % of 25 % ammonium sulphate solution, were further added to the obtained wood composition by using also the syringe dosing pump system (i.e. Prosense BV NE-300), at a rate of 15 ml/min. The wood composition, obtained thereof, was stirred for another 5 minutes. The solid content of the adhesive formulation was 65 wt %, relative to the total weight of the adhesive formulation. 10 wt % dry matter from adhesive formulation with respect to the total dry weight of the wood particles, was added. At first, the wood composition was pre-pressed under manual pressing thereby forming a rectangular wood cake having following size of 21 X 25.3 cm. The so obtained rectangular wood cake was placed between 2 2 mm metal plates and then hot pressed during 2 minutes using a GEM 40T 300 x 300 press, produced by JBT Engineering, at a press surface temperatures of 200 °C under a pressure corresponding to a weight of about 20 ton. 12 mm metal spacers were at each side thereby forming a wooden panel of 12 mm thickness. 4 test samples of 5 X 5 cm were cut out wooden panel so obtained.

The water absorption and thickness swell of these test samples were determined by using the standard test methods according to the ASTM standard D-1037-99. In particular, each of these 4 test samples were submerged under a 17 cm water column. The amount of water absorbed was measured as a percentage increase in weight of the 5 X 5 cm wooden panel test samples after submersion of 2h, 5h or 6h and 24 h. The thickness swelling was measured as a percentage increase in the thickness of the middle part of the 5 X 5 cm wooden panel test samples after submersion of 2h, 5h or 6h and 24 h.

The results are summarized in Tables 1 and 2.

Tables 1 and 2 shows the influence of the penetration value P mm of the organic composition and the ketone content on the water repellent properties, i.e. reduced water uptake and swelling tendency of the particle boards panels.

Table 1 and table 2 shows that organic ketone compositions with both higher penetration values and higher ketone content (Ex1, Ex2, Ex3 and Ex4) gave the lowest water uptake and swelling values in contrast to the organic ketone compositions that only fulfilled one of both requirements : only high penetration value (CE8, CE9, CE10, CE11 and CE12) or only high ketone concentration (CE7 and CE14).

### 5. Semi-industrial procedure for producing particle boards using the aqueous emulsion of example 5, comparative examples 6, 7 and 15 -18, as described under point 3

Wood particles were first prepared from pure debarked spruce wood using a combination of drum chipper, knife-ring flaker and cross hammer mill techniques. 35% of the particles were from the sieve fraction between 3.15 and 5 mm, 50% from the sieve fraction between 1.25 mm and 3.15 mm and 15% from the sieve fraction between 0.6 and 1.25 mm. Before further use, particles were dried in a drying cabinet at 70°C.

A specific glue blender, similar to the ones used on industrial scale was used for mixing wood with emulsion and glue.

First 8% ureum formaldehyde glue (Kaurit ® 350, produced by BASF) based on oven dry wood was applied Then emulsion up to 0.6% dry matter from emulsion on oven-dry wood was added in the same blender. One layer particleboards with dimensions 16 mm thick, 50 cm broad, 50 cm long, were produced by using a press with a surface area of 600 x 600 mm. Pressing time was 2 minutes and 40 seconds and pressing temperature was 200°C. Target density of the wooden panel was 650 kg/m³. The values displayed are always the average from 2 boards produced in the same way.

The water absorption and thickness swell of these test samples were determined by using the standard test methods according to the ASTM standard D-1037-99. In particular, each of these 4 test samples were submerged in a 17 cm water column. The amount of water absorbed was measured as a percentage increase in weight of the 5 X 5 cm wooden panel test samples after submersion of 2h, 5h or 6h and 24 h. The thickness swelling was measured as a percentage increase in the thickness of the middle part of the 5 X 5 cm wooden panel test samples after submersion of 2h, 5h or 6h and 24 h.

The results are summarized in Table 3.

It can be seen in Table 3 that organic ketone compositions with low penetration value (CE6, CE7, CE15, CE16 and CE17) gave the higher water uptake and swelling results. From this, one can conclude that these harder compositions are less suited for hydrophobization of wood-based raw materials. On the other hand the organic ketone composition with higher penetration value (Ex 5) gave the lowest water uptake and swelling values. This ketone composition showed a similar performance compared to a wax obtained from the solvent dewaxing of an SN150 base oil, which is known to perform very well in this application.

**Table 1:**

| **Example Number** | **BL^{a}** | **Ex1** | **Ex2** | **Ex3** | **Ex4** | **CE7** | **CE8** | **CE9** | **CE10** | **CE11** | **CE12** | **CE13** | **CE14** |
|---|---|---|---|---|---|---|---|---|---|---|---|---|---|
| ***Organic ketone composition*** | | | | | | | | | | | | | |
| Penetration value P mm | NA | 54 | 183 | >130 | >130 | 17 | >170 | >170 | 167 | 136 | 104 | 56 | 35 |
| Wt % of ketones (i.e value x), relative to total weight of organic composition | 0 | 100 | 61 | 96 | 97 | 100 | 10 | 15 | 20 | 25 | 30 | 40 | 60 |

| **Particle Board - *Water repellent properties*** | | | | | | | | | | | | | |
|---|---|---|---|---|---|---|---|---|---|---|---|---|---|
| Water uptake 2h | 81 | 24 | 19 | 27 | 26 | 76 | 65 | 61 | 59 | 60 | 64 | 56 | 71 |
| Water uptake 5h | 83 | 36 | 28 | 40 | 39 | 81 | 72 | 69 | 67 | 68 | 73 | 65 | 78 |
| Water uptake 24h | 90 | 63 | 52 | 64 | 63 | 89 | 83 | 80 | 78 | 80 | 83 | 77 | 87 |
| Thickness swelling 2h | 16 | 7 | 6 | 7 | 7 | 14 | 15 | 15 | 15 | 14 | 15 | 14 | 14 |
| Thickness swelling 5h | 17 | 9 | 8 | 10 | 10 | 15 | 16 | 17 | 16 | 16 | 17 | 16 | 16 |
| Thickness swelling 24h | 18 | 17 | 17 | 18 | 17 | 17 | 18 | 19 | 18 | 18 | 18 | 18 | 18 |

| | | | | | | | | | | | | | |
|---|---|---|---|---|---|---|---|---|---|---|---|---|---|
| ^{a} BL refers to the blanco and the particle board has been manufactured according to the general procedure as described under point 4 but without adding any aqueous emulsion comprising an organic ketone composition. | | | | | | | | | | | | | |

**Table 2:**

| **Example Number** | **BL^{a}** | **Ex1** | **Ex2** | **CE18** | **CE19** | **CE20** |
|---|---|---|---|---|---|---|
| ***Organic ketone composition*** | | | | | | |
| Penetration value P mm | NA | 54 | 183 | 45 | 72 | 95 |
| Wt % of ketones (i.e value x), relative to total weight of organic composition | 0 | 100 | 61 | NA | NA | NA |

| **Particle Board** - ***Water repellent properties*** | | | | | | |
|---|---|---|---|---|---|---|
| Water uptake 2h | 81 | 24 | 19 | 19 | 26 | 59 |
| Water uptake 5h | 83 | 36 | 28 | 33 | 38 | 73 |
| Water uptake 24h | 90 | 63 | 52 | 71 | 69 | 86 |
| Thickness swelling 2h | 16 | 7 | 6 | 6 | 7 | 13 |
| Thickness swelling 5h | 17 | 9 | 8 | 8 | 9 | 16 |
| Thickness swelling 24h | 18 | 17 | 17 | 17 | 19 | 19 |

| | | | | | | |
|---|---|---|---|---|---|---|
| ^{a} BL refers to the blanco and the particle board has been manufactured according to the general procedure as described under point 4 but without adding any aqueous emulsion comprising an organic ketone composition. | | | | | | |

**Table 3:**

| **Example Number** | **BL^{a}** | **Ex5** | **CE6** | **CE7** | **CE15** | **CE16** | **CE17** | **CE18** |
|---|---|---|---|---|---|---|---|---|
| ***Organic ketone composition*** | | | | | | | | |
| Penetration value P, expressed in mm | NA | 183 | 7 | 17 | 10 | 30 | 10 | 45 |
| Wt % of ketones (i.e value x), relative to total weight of organic composition | 0 | 61 | 100 | 100 | 100 | 100 | 100 | NA |

| **Particle Board** - ***Water repellent properties*** | | | | | | | | |
|---|---|---|---|---|---|---|---|---|
| Water uptake 2h | 42 | 23 | 43 | 43 | 43 | 41 | 43 | 23 |
| Water uptake 5h | 43 | 30 | 44 | 45 | 45 | 42 | 44 | 34 |
| Thickness swelling 2h | 13 | 7 | 13 | 12 | 12 | 13 | 13 | 7 |
| Thickness swelling 5h | 14 | 10 | 13 | 14 | 13 | 13 | 13 | 11 |

| | | | | | | | | |
|---|---|---|---|---|---|---|---|---|
| ^{a} BL refers to the blanco and the particle board has been manufactured according to the general procedure as described under point 5 but without adding any aqueous emulsion comprising an organic ketone composition. | | | | | | | | |

## Claims

1. An aqueous emulsion for use in a method for the hydrophobization of wood-based materials comprising, based on the total weight of the aqueous emulsion,
a) from 1 to 70 wt % of an organic composition having a penetration value P, expressed in mm, of at least 40, measured in accordance with the ASTM standard method D1321 - 10 at 24 °C,
b) from 0.1 to 10 wt % of at least one emulsifier, and
c) from 20 to 98.9 wt % of water,
and wherein said organic composition comprises at least one ketone having the formula R1-CO-R2, wherein R1 and R2 are hydrocarbon radicals which are independently selected from hydrocarbon radicals comprising from 6 to 24 carbon atoms, in an amount of at least 32 percent by weight (wt %), relative to the total weight of the organic composition, when the penetration value P mm is equal to or higher than 110 or in an amount of at least x percent by weight (wt %), relative to the total weight of the organic composition, wherein x > 3520/P when P is higher than 40 but lower than 110.

2. The aqueous emulsion according to claim 1, wherein the organic composition has a penetration value P mm of at least 110 and the at least one ketone having the formula R1-CO-R2 is present in the organic composition in an amount of at least 50 wt %, relative to the total weight of the organic composition.

3. The aqueous emulsion according to claim 1 or claim 2, wherein the organic composition comprises at least 2 ketones, more preferably at least 3 ketones, having the formula R1-CO-R2, wherein R1 and R2 are hydrocarbon radicals which are independently selected from hydrocarbon radicals comprising from 12 to 20 carbon atoms, more preferably from 12 to 18 carbon atoms.

4. The aqueous emulsion according to any one of the preceding claims, wherein the organic composition is obtained by processes comprising at least one ketonisation step of mixtures comprising at least one component selected from fatty acids, esters of fatty acids, fatty alcohols, fatty aldehydes, anhydrides of fatty acids, and metal salts of fatty acids.

5. The aqueous emulsion according to any one of the preceding claims, wherein the organic composition is derived from a starting material of biological origin selected from the group consisting of
a) plant fats, oils, waxes; animal fats, oils, waxes; fish fats, oils, waxes, and
b) fatty acids or free fatty acids obtained from plant fats, plant oils, plant waxes; animal fats, animal oils, animal waxes; fish fats, fish oils, fish waxes, and mixtures thereof by hydrolysis, transesterification or pyro lysis, and
c) esters obtained from plant fats, plant oils, plant waxes; animal fats, animal oils, animal waxes; fish fats, fish oils, fish waxes, and mixtures thereof by transesterification, and
d) metal salts of fatty acids obtained from plant fats, plant oils, plant waxes; animal fats, animal oils, animal waxes; fish fats, fish oils, fish waxes, and mixtures thereof by saponification, and
e) anhydrides of fatty acids from plant fats, plant oils, plant waxes; animal fats, animal oils, animal waxes; fish fats, fish oils, fish waxes, and mixtures thereof, and
f) esters obtained by esterification of free fatty acids of plant, animal and fish origin with alcohols, and
g) fatty alcohols or aldehydes obtained as reduction products of fatty acids from plant fats, plant oils, plant waxes; animal fats, animal oils, animal waxes; fish fats, fish oils, fish waxes, and mixtures thereof, and
h) recycled food grade fats and oils, and fats, oils and waxes obtained by genetic engineering, and
i) fatty acids rich mixtures obtained as a side stream during purification of animal and plant triglycerides, and
j) mixtures of the starting materials.
by using a process including at least one ketonisation step.

6. The aqueous emulsion according to claim 5, wherein the organic composition is derived from a starting material of biological origin selected from the group consisting of
a) plant fats, oils, waxes; animal fats, oils, waxes; fish fats, oils, waxes, and
b) fatty acids or free fatty acids obtained from plant fats, plant oils, plant waxes; animal fats, animal oils, animal waxes; fish fats, fish oils, fish waxes, and mixtures thereof by hydrolysis, transesterification or pyro lysis, and
i) fatty acids rich mixtures obtained as a side stream during purification of animal and plant triglycerides.

7. The aqueous emulsion according to any one of the preceding claims, wherein the aqueous emulsion further comprise at least one fossil-based derivative selected from petroleum-based products such as slackwax, soft waxes, mineral oil, foots oil, extracts such as residual aromatic extract, semi-refined wax, fully refined wax and Fischer-Tropsch wax and mixtures thereof and based on the total weight of the aqueous emulsion, the sum of the weight of the organic composition and the at least one fossil-based derivative is from 1 to 70 wt %.

8. The aqueous emulsion according to any one of the preceding claims, wherein the aqueous emulsion further comprises other ingredients in an amount from 0.1 to 5.0 wt %, based on the total weight of the aqueous emulsion.

9. A method for the hydrophobization of wood-based materials wherein said wood-based materials are hydrophobized with the aqueous emulsion according to any one of claims 1 to 8.

10. The method according to claim 9, wherein the aqueous emulsion is applied onto the surface or at least part of the surface of the wood-based materials, using application techniques selected from the group of impregnating, padding, and coating.

11. The method according to claim 9 or claim 10, wherein the aqueous emulsion is applied onto the surface or at least part of the surface of the wood-based materials in the form of a mixture with at least one binder or is applied separately onto the surface or at least part of the surface of the wood-based materials prior or after the addition of the at least one binder.

12. The method according to any one of claims 9 to 11, wherein the wood-based materials are wood elements preferably selected from wood veneer, wood strands, wood chips, wood flakes, wood fibers, wood shavings, wood wafers and wherein the aqueous emulsion is applied onto and/or mixed with said wood elements thereby forming a wood composition.

13. A wood composition comprising the aqueous emulsion according to any one of claims 1 to 8, and wood elements and based on the total dry weight of the wood elements, comprises
a) from 0.1 to 2.0 wt %, preferably 0.3 to 1.5 wt %, more preferably 0.5 to 1.2 wt %, of solids content of the aqueous emulsion,
b) from 0 to 50 %, preferably from 3 to 30 %, more preferably from 3 to 20 %, even more preferably from 5 to 15.0 %, by dry weight of at least one binder, and
c) optionally from 0 to 15 %, preferably from 0.1 to 10 %, more preferably from 0.1 to 5 %, by dry weight of any additional additive.

14. A method for manufacturing a wood composite object comprising using the wood composition according to claim 13, wherein said wood composition is subjected to wood-processing methods which comprises applying heat, pressure or a combination thereof.

15. A wood composite object comprising the wood composition according to claim 13 or obtained from the method of claim 14, wherein the wood composite object is selected from wood-based composite panels, wood-based composite pallets, paper-based materials.

16. A method for the hydrophobization of wood-based materials wherein said wood-based materials are hydrophobized with an organic composition as defined in any one of claims 1 to 6.
